# EUROPÄISCHE PATENTANMELDUNG

(11) **EP 1 400 704 A1**
(43) Veröffentlichungstag der Anmeldung: **24.03.2004**
(21) Anmeldenummer: 03018967.4
(22) Anmeldetag: 21.08.2003
(51) Int. Cl.: F16B 13/00

(54) **Einrichtung zur distanzierten Befestigung von Wärmedämmplatten an Wänden oder Decken**

(30) Priorität: 19.09.2002 AT 6242002
(71) Anmelder: Holzinger, Alois, sen., 6800 Feldkirch (AT)
(72) Erfinder: Holzinger, Alois, sen., 6800 Feldkirch (AT)
(74) Vertreter: Hefel, Herbert, Dipl.-Ing.

(57) **Zusammenfassung**

Bei einer Einrichtung zur distanzierten Befestigung von Wärmedämmplatten (15) an Wänden (16) oder Decken mit einem in die Wärmedämmplatte (15) einschraubbaren Plattenhalter (6), der einen Schaft (1) und mindestens ein um den Schaft (1) schraubenflächenartig umlaufendes Band (20) aufweist, und mit einer durch eine Längsbohrung (2) durch den Schaft (1) einführbaren und in einem Bohrloch (19) in der Wand (16) oder Decke verankerbaren Befestigungsvorrichtung zur Befestigung des Plattenhalters (6) an der Wand (16) oder Decke, ist zur Befestigung des Plattenhalters (6) an der Wand (16) oder Decke eine Spannhülse (7) vorgesehen, die auf einen Bohrer (17) eines Bohrhammers aufsteckbar ist und bei der Ausbildung des Bohrlochs (19) mittels des vom Bohrhammer angetriebenen Bohrers (17) in das vom Bohrer (17) ausgebildete Bohrloch (19) eintreibbar ist.

## Beschreibung

Die Erfindung betrifft eine Einrichtung zur distanzierten Befestigung von Wärmedämmplatten an Wänden oder Decken mit einem in die Wärmedämmplatte einschraubbaren Plattenhalter, der einen Schaft und mindestens ein um den Schaft schraubenflächenartig umlaufendes Band aufweist, und mit einer durch eine Längsbohrung durch den Schaft einführbaren und in einem Bohrloch in der Wand oder Decke verankerbaren Befestigungsvorrichtung zur Befestigung des Plattenhalters an der Wand oder Decke.

Eine derartige Einrichtung ist aus der EP 0 811 773 A2 bekannt. Zur Befestigung einer Wärmedämmplatte an einer Wand oder Decke wird zunächst der Plattenhalter bzw. "Stellfuchs" in die Wärmedämmplatte eingedreht, bis die innere Stirnseite des Plattenhalters an der Wand anliegt. In der Folge wird mit einem von einem Bohrhammer angetriebenen Bohrer durch die Längsbohrung des Plattenhalters hindurch eine Bohrung in der Wand eingebracht. Um eine definierte Bohrtiefe zu erhalten, ist vorzugsweise ein Bundbohrer vorgesehen und der Bohrvorgang wird ausgeführt, bis der Bund des Bohrers an einer Schulter der Längsbohrung des Plattenhalters ansteht. Nach dem Herausziehen des Bohrers kann in der Folge die Wärmedämmplatte an der Wand oder Decke befestigt werden. Hierzu wird ein, vorzugsweise bereits am vorderen Ende einer Befestigungsschraube angeordneter Dübel in das in der Wand oder Decke eingebrachte Bohrloch gesetzt. Zu diesem Zweck ist ein Montagewerkzeug vorgesehen, welches eine Sacklochbohrung aufweist, in der der Kopf und ein Teil des Schaftes der Schraube, an derem vorderen Ende der Dübel angeordnet ist, liegt. Das Montagewerkzeug wird eingedrückt, bis sein vorderes Ende an einer Schulter des Plattenhalters anliegt. In der Folge wird die Befestigungsschraube in den gesetzten Dübel eingeschraubt. Der Abstand der Wärmedämmplatte von der Wand kann nunmehr durch Verdrehen des Plattenhalters gegenüber der Wärmedämmplatte justiert werden.

Obwohl sich diese beschriebene Einrichtung in der Praxis sehr gut bewährt hat und mit dieser Einrichtung eine zuverlässige und nachjustierbare distanzierte Befestigung von Wärmedämmplatten an Wänden und Decken ermöglicht wird, ist es Aufgabe der Erfindung diese Einrichtung auf eine Weise weiter zu verbessern, dass der Montagevorgang vereinfacht wird. Erfindungsgemäß gelingt dies durch eine Einrichtung mit den Merkmalen des Anspruchs 1.

Bei einer erfindungsgemäßen Einrichtung entfallen gegenüber der vorbekannten Einrichtung der eingangs genannten Art die Montageschritte des Vorbohrens des Bohrloches in der Wand oder Decke und das Setzen des Dübels in diesem Bohrloch. Um die Einrichtung zu montieren, wird nach dem Eindrehen des Plattenhalters in die Wärmedämmplatte die auf den Bohrer aufgesteckte Spannhülse gleichzeitig mit dem Bohrvorgang durch den Bohrhammer in das durch den Bohrer gebildete Bohrloch eingetrieben. Nach dem Herausziehen des Bohrers ist die Spannhülse im Bohrloch bereits fertig fixiert und der Abstand der Wärmedämmplatte von der Wand kann wie bisher durch Verdrehen des Plattenhalters nachjustiert werden.

Bekannt ist eine solche Spannhülse im Zusammenhang mit einem Bohrdübel, der bei der Verklebung von Wärmedämmplatten an einer Wand zur Erstfixierung der Wärmedämmplatten bis zum Aushärten des Klebers dient. Dieser Bohrdübel weist einen Plattenhalter mit einem Schaft und einer am äußeren Ende des Schaftes zur Anlage an der Außenseite der Wärmedämmplatte bestimmten Scheibe auf. Der Schaft ist mit einer Längsbohrung versehen, die im Bereich ihres vorderen, der Wand zugewandten Endes mit einer Querschnittsverjüngung versehen ist. In dieser Längsbohrung ist eine Spannhülse angeordnet, die mit ihrem von der Wand abgewandten rückseitigen Ende aus dem Plattenhalter heraussteht. Der Plattenhalter wird in die Wärmedämmplatte eingedrückt, bis die tellerartige Scheibe an der Außenseite der Wärmedämmplatte anlegt. In der Folge wird ein Bohrer eines Bohrhammers durch die Spannhülse eingeführt und ein Bohrloch in die Wand eingebracht, wobei die Spannhülse beim Einbringen des Bohrlochs in dieses eingetrieben wird, bis der am rückseitigen Ende der Spannhülse vorstehende Bund an der Querschnittsverjüngung der Längsbohrung des Plattenhalters anliegt. Eine Verdrehung des Plattenhalters gegenüber der Wärmedämmplatte ist bei diesem Bohrdübel nicht vorgesehen und nicht möglich.

Weitere Vorteile und Einzelheiten der Erfindung werden im folgenden anhand der beiliegenden Zeichnung erläutert. In dieser zeigen:
- Fig. 1: eine Seitenansicht eines Plattenhalters einer erfindungsgemäßen Einrichtung, teilweise aufgerissen;
- Fig. 2: eine Seitenansicht einer Spannhülse einer erfindungsgemäßen Einrichtung;
- Fig. 3: eine Seitenansicht der Spannhülse von Fig. 2 von der gegenüberliegenden Seite;
- Fig. 4: einen Schnitt entlang der Linie AA von Fig. 3;
- Fig. 5: eine Seitenansicht eines Bohrers zur Montage einer erfindungsgemäßen Einrichtung und
- Fig. 6: einen vertikalen Längsschnitt durch eine an einer Wand zu befestigende Wärmedämmplatte mit einer erfindungsgemäßen Einrichtung in Seitenansicht bei der Montage derselben.

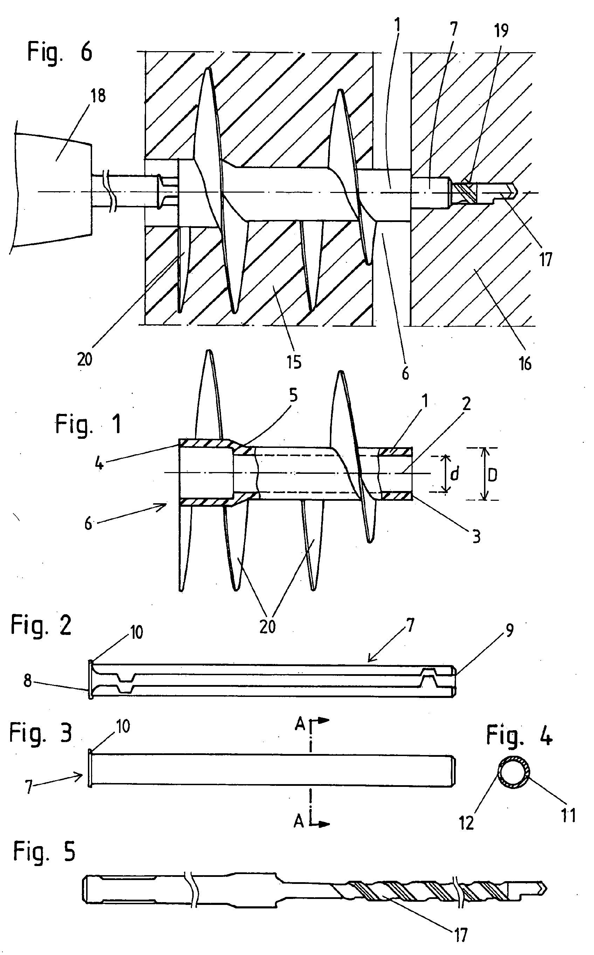

Das in Fig. 1 dargestellte Ausführungsbeispiel eines beispielsweise einstückig aus einem geeigneten Kunststoff gefertigten Plattenhalters ("Stellfuchses") einer erfindungsgemäßen Einrichtung besitzt einen zentralen Schaft 1, der von einer Längsbohrung 2 durchsetzt ist. Diese Längsbohrung weist einen dem vorderen Ende 3 benachbart liegenden Abschnitt mit einem kleineren Durchmesser und einem dem hinteren Ende 4 benachbart liegenden Abschnitt mit einem größeren Durchmesser auf, wobei am Übergang zwischen diesen beiden Abschnitten eine Schulter 5 ausgebildet ist. Der Abschnitt der Längsbohrung 2 mit dem größeren Durchmesser besitzt eine wesentlich geringere Länge als der Abschnitt mit dem kleineren Durchmesser und ist vorzugsweise kürzer als 2cm. Dieser Abschnitt mit dem größeren Durchmesser kann beispielsweise im Querschnitt quadratisch ausgebildet sein, wodurch ein Werkzeugansatz zur Verdrehung des Plattenhalters 6 ausgebildet wird.

Am zentralen Schaft 1 ist ein schraubenflächenartig umlaufendes Band 20 vorgesehen, das beim gezeigten Ausführungsbeispiel von zwei nicht unmittelbar aneinander anschließenden Abschnitten gebildet wird. Die auf die Länge des Bandes 20 bezogene durchschnittliche Breite B ist größer als der Außendurchmesser D des zentralen Schaftes 1.

Die erfindungsgemäße Einrichtung besitzt weiters eine Spannhülse 7 aus einem federelastischen Material, vorzugsweise Federstahl. Die Spannhülse 7 weist an ihrem hinteren Ende 8 einen nach außen abstehenden Bund 10 auf und ist an ihrem vorderen Ende 9 durch eine Abschrägung der äußeren Oberfläche ihres Mantels, welche eine Einlaufschräge darstellt, mit einer Querschnittsverjüngung versehen. Die Wandung 11 der Spannhülse 7 besitzt einen über die Länge der Spannhülse durchgehenden Spalt 12, der über einen Großteil der Länge seines Verlaufs in achsialer Richtung der Spannhülse 7 verläuft. Dieser achsiale Verlauf wird lediglich an zwei Stellen unterbrochen, an denen der eine Rand des Spaltes als in Umfangsrichtung sich erstreckende Zunge 13 ausgebildet ist und der gegenüberliegende Rand des Spaltes eine gegengleiche Ausnehmung 14 aufweist. Beim Zusammendrücken der Spannhülse 7 unter Verkleinerung der Breite des Spaltes 12 dienen diese Zungen 13 und zugehörigen Ausnehmungen 14 als Führung.

Zur distanzierten Befestigung einer Wärmedämmplatte 15 an einer Wand 16 wird zunächst der Plattenhalter 6 in die Wärmedämmplatte 15 eingedreht, bis das vordere Ende 3 an der Wand 16 anliegt, wie dies in Fig. 6 dargestellt ist. In der Folge erfolgt die Befestigung des Plattenhalters 6 an der Wand, indem eine Spannhülse 7 auf einen Bohrer 17 (Fig. 5) aufgeschoben wird, wobei der Bohrer 17 im Bohrfutter 18 eines herkömmlichen Bohrhammers eingespannt ist. Der Bohrer 17, der in einer zum Bohren des Materials der Wand 16 geeigneten Weise ausgebildet ist, zusammen mit der auf den Bohrer 17 aufgeschobenen Spannhülse 7 wird durch die zentrale Längsbohrung 2 des Plattenhalters 6 eingeführt, bis der Bohrer 17 an der Wand 16 anliegt. In der Folge wird ein Bohrloch 19 in die Wand 16 eingebracht, wobei gleichzeitig die Spannhülse 7 in dieses Bohrloch 19 eingetrieben wird. Die Spannhülse 7 wird hierbei unter Verkleinerung der Breite ihres Spaltes 12 zusammengedrückt. In Fig. 6 ist der Arbeitsschritt dargestellt, bei welchem die Bohrung 19 gerade eingebracht wird und die Spannhülse 7 eingetrieben wird. Das Vorantreiben der Bohrung 19 und Eintreiben der Spannhülse 7 erfolgt solange, bis der Bund 10 der Spannhülse 7 an der Schulter 5 der Längsbohrung 2 des Plattenhalters 6 anliegt. Der Bohrer 17 wird in der Folge aus dem Bohrloch 19 herausgezogen und der Plattenhalter 6 ist durch die im Bohrloch 19 verspannte Spannhülse 7 an der Wand 16 befestigt.

Bei der Auslieferung einer erfindungsgemäßen Einrichtung könnte die Spannhülse 7 bereits mit ihrem vorderen Ende in der Längsbohrung 2 stecken, wobei sie bereits unter Verringerung der Breite ihres Spaltes 12 zusammengedrückt ist, um das Eintreiben in das Bohrloch 19 zu erleichtern. Zur Verringerung der Reibung der Spannhülse 7 gegenüber der Wandung der Längsbohrung 2 könnte der Abschnitt der Längsbohrung 2 mit dem schmaleren Durchmesser an einer oder mehreren Stellen Querschnittsverjüngungen aufweisen, die durch nach innen vorspringende Ringbunde gebildet werden. Überraschenderweise hat es sich gezeigt, dass ein Eintreiben der Spannhülse 7 in das Bohrloch 19 auch dann möglich ist, wenn die Spannhülse 7 gegenüber dem Abschnitt der Längsbohrung 2 mit dem geringeren Durchmesser immer noch ein Spiel aufweist und beim Durchführen durch diese Längsbohrung 2 nicht zusammengedrückt wird.

Die Schulter der Längsbohrung 2, an der der Bund 10 der Spannhülse 7 anliegt, befindet sich vorzugsweise in einem hinteren Drittel der Längsbohrung 2. Durch eine erfindungsgemäße Einrichtung sind somit Querlasten aufnehmbar. Auch eine Anlage des Bundes 10 am hinteren Rand 4 der Längsbohrung wäre denkbar und möglich.

Der mittels der Spannhülse 7 an der Wand 16 befestigte Plattenhalter 6 ist auf der Spannhülse 7 um seine Längsachse drehbar gehalten und zur Nachjustierung des Abstandes der Wärmedämmplatte 15 von der Wand 16 kann der Plattenhalter 6 entsprechend verdreht werden. Hierzu wird ein Drehwerkzeug in einen am hinteren Ende 4 vorgesehenen Werkzeugansatz eingeführt. Beim gezeigten Ausführungsbeispiel wird dieser Werkzeugansatz vom Abschnitt der Längsbohrung 2 mit dem vergrößerten Durchmesser gebildet, der im Querschnitt quadratisch ausgebildet ist.

Unterschiedliche Modifikationen des gezeigten Ausführungsbeispiels sind denkbar und möglich, ohne den Bereich der Erfindung zu verlassen. So könnte das Band (bzw. die Wendel) 20 beispielsweise nicht aus zwei Abschnitten bestehen, sondern durchgehend ausgebildet sein. Der Werkzeugansatz am hinteren Ende 4 könnte beispielsweise von einer Nut zum Ansatz eines Schraubenziehers gebildet werden. Die Längsbohrung 2 könnte durchgehend bis zum hinteren Ende 4 mit einem konstanten Durchmesser ausgebildet sein. Die Schulter 5 könnte in diesem Fall vom an das hintere Ende 4 der Längsbohrung 2 angrenzenden Stirnseite im Bereich des Schaftes 1 gebildet werden.

### Legende zu den Hinweisziffern:

- 1: Schaft
- 2: Längsbohrung
- 3: vorderes Ende
- 4: hinteres Ende
- 5: Schulter
- 6: Plattenhalter
- 7: Spannhülse
- 8: hinteres Ende
- 9: vorderes Ende
- 10: Bund
- 11: Wandung
- 12: Spalt
- 13: Zunge
- 14: Ausnehmung
- 15: Wärmedämmplatte
- 16: Wand
- 17: Bohrer
- 18: Bohrfutter
- 19: Bohrloch
- 20: Band

## Patentansprüche

1. Einrichtung zur distanzierten Befestigung von Wärmedämmplatten (15) an Wänden (16) oder Decken mit einem in die Wärmedämmplatte (15) einschraubbaren Plattenhalter (6), der einen Schaft (1) und mindestens ein um den Schaft (1) schraubenflächenartig umlaufendes Band (20) aufweist, und mit einer durch eine Längsbohrung (2) durch den Schaft (1) einführbaren und in einem Bohrloch (19) in der Wand (16) oder Decke verankerbaren Befestigungsvorrichtung zur Befestigung des Plattenhalters (6) an der Wand (16) oder Decke, **dadurch gekennzeichnet, dass** zur Befestigung des Plattenhalters (6) an der Wand (16) oder Decke eine Spannhülse (7) vorgesehen ist, die auf einen Bohrer (17) eines Bohrhammers aufsteckbar ist und bei der Ausbildung des Bohrlochs (19) mittels des vom Bohrhammer angetriebenen Bohrers (17) in das vom Bohrer (17) ausgebildete Bohrloch (19) eintreibbar ist.

2. Einrichtung nach Anspruch 1, **dadurch gekennzeichnet, dass** die Spannhülse (7), vorzugsweise an ihrem von der Wand (16) oder Decke abgelegenen hinteren Ende (8) einen nach außen abstehenden Bund (10) aufweist, der im montierten Zustand der Wärmedämmplatte (15) an einer Schulter (5) der Längsbohrung (2), die sich vorzugsweise in einem hinteren Drittel der Längsbohrung (2) befindet, oder am hinteren Rand (4) der Längsbohrung (2) anliegt.

3. Einrichtung nach Anspruch 1 oder Anspruch 2, **dadurch gekennzeichnet, dass** die Längsbohrung (2) einen ihrem der Wand (16) oder Decke zugewandten vorderen Ende (3) benachbarten ersten Abschnitt und einen auf der von der Wand (16) oder Decke abgelegenen Seite des ersten Abschnitts anschließenden zweiten Abschnitt aufweist, wobei der erste Abschnitt der Längsbohrung (2) einen gegenüber dem zweiten Abschnitt kleineren Durchmesser aufweist und am Übergang zwischen dem ersten Abschnitt und dem zweiten Abschnitt eine Schulter (5) zur Anlage des Bundes (10) der Spannhülse (7) ausgebildet ist.

4. Einrichtung nach Anspruch 3, **dadurch gekennzeichnet, dass** der zweite Abschnitt der Längsbohrung (2) kürzer als der erste Abschnitt ist, vorzugsweise weniger als halb so lang wie der erste Abschnitt ist.

5. Einrichtung nach Anspruch 4, **dadurch gekennzeichnet, dass** der zweite Abschnitt kürzer als 2cm ist.

6. Einrichtung nach einem der Ansprüche 1 bis 5, **dadurch gekennzeichnet, dass** die Wandung der Spannhülse (7)einen über ihre Länge durchgehenden Spalt (12) aufweist.

7. Einrichtung nach Anspruch 6, **dadurch gekennzeichnet, dass** sich der Spalt (12) über einen Großteil seines Verlaufs in achsialer Richtung der Spannhülse (7) erstreckt.
